**Europäisches Patentamt**

**European Patent Office**

**Office européen des brevets**

(19)

(11) Numéro de publication : **0 346 186 B1**

(12)

# FASCICULE DE BREVET EUROPEEN

(45) Date de publication du fascicule du brevet :
04.11.92 Bulletin 92/45

(51) Int. Cl.⁵ : **F16F 9/50, F16F 9/06**

(21) Numéro de dépôt : **89401489.3**

(22) Date de dépôt : **31.05.89**

(54) **Dispositif de suspension hydropneumatique perfectionné et véhicule équipé de ce dispositif.**

(30) Priorité : **08.06.88 FR 8807644**

(43) Date de publication de la demande :
**13.12.89 Bulletin 89/50**

(45) Mention de la délivrance du brevet :
**04.11.92 Bulletin 92/45**

(84) Etats contractants désignés :
**DE GB IT**

(56) Documents cités :
EP-A- 0 044 545
EP-A- 0 264 324
DE-B- 1 093 145
FR-A- 2 425 585
FR-A- 2 587 773

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Edwige, François**
**19 Jardins Boieldieu**
**F-92800 Puteaux (FR)**

(74) Mandataire : **Durand, Yves Armand Louis et al**
**CABINET WEINSTEIN 20, Avenue de**
**Friedland**
**F-75008 Paris (FR)**

EP 0 346 186 B1

Jouve, 18, rue Saint-Denis, 75001 PARIS

## Description

La présente invention a essentiellement pour objet un dispositif de suspension hydropneumatique pour véhicule automobile.

Elle vise également les véhicules équipés de ce dispositif.

On connait déjà des vérins de suspension hydropneumatique pour roue de véhicule comprenant notamment un cylindre articulé à la partie suspendue du véhicule et dans lequel coulisse un piston articulé au bras de support de roue, lequel cylindre est hydrauliquement relié à un accumulateur hydropneumatique par l'intermédiaire d'un amortisseur interposé entre le piston et l'accumulateur. (voir document DE-A-1 093 145)

L'élément amortisseur comporte, d'une manière générale, des orifices obturés par des clapets dans les deux sens de déplacement du liquide entre le cylindre et l'accumulateur, ces clapets pouvant s'ouvrir lorsque la pression croît de manière à ralentir les échanges entre le cylindre et l'accumulateur. Il en résulte que l'écoulement du liquide est ainsi freiné, ce qui a pour effet de réduire l'amplitude des oscillations ou des mouvements verticaux de la roue.

Par ailleurs, le document EP-A-0 044 545 décrit un dispositif d'amortissement comportant deux chambres reliées par un amortisseur interposé entre les deux chambres et dont le déplacement est limité dans les deux sens.

Toutefois, dans les suspensions connues avec amortisseur, la loi de diminution des amplitudes d'oscillations n'est pas toujours satisfaisante dans toutes les conditions. Cela est particulièrement le cas pour les déplacements verticaux de roue d'amplitude faible et provoqués par exemple par un roulage du véhicule à faible vitesse sur route rugueuse.

Dans un tel cas, il convient de transmettre des efforts les plus faibles possibles à la caisse, et pour cela, de supprimer ceux qui sont provoqués par l'amortisseur.

La présente invention parvient à ce résultat en proposant un dispositif de suspension perfectionné qui prend en compte des amplitudes de mouvements verticaux de roue de quelques centimètres seulement, et cela de façon à ne pas nuire à la tenue de route du véhicule.

A cet effet, l'invention a pour objet un dispositif de suspension hydropneumatique pour véhicule automobile, comprenant un cylindre articulé de préférence à la partie suspendue du véhicule et dans lequel coulisse un piston articulé de préférence à un bras support de roue, ledit cylindre étant hydrauliquement relié à un accumulateur hydropneumatique par l'intermédiaire d'une pièce mobile formant amortisseur interposé entre le piston et l'accumulateur, caractérisé en ce que le déplacement de l'amortisseur est limité dans les deux sens par l'écrasement de l'un ou l'autre de deux anneaux élastiques logés dans un chambrage comportant des épaulements et ménagé dans le cylindre ou dans une pièce rapportée sur ce cylindre, et en ce que deux bagues sont disposées chacune de part et d'autre de l'amortisseur et comportent chacune du côté de l'anneau élastique une extrémité rabattue vers l'intérieur du chambrage et permettant sous l'effet du déplacement de l'amortisseur, l'écrasement des anneaux tout en les maintenant contre les épaulements du chambrage.

Ainsi, comme on le comprend, une partie de l'huile déplacée par le mouvement de la roue ne traversera pas l'amortisseur mais provoquera plutôt le déplacement d'une pièce, quasiment sans résistance.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue partielle et en coupe d'un dispositif de suspension équipé des perfectionnements suivant l'invention et dans lequel le vérin de suspension n'est représenté que partiellement ; et

La figure 2 est une vue en élévation et en coupe axiale illustrant ici complètement un vérin de suspension équipé des perfectionnements selon l'invention, similaires à ceux montrés sur la figure 1.

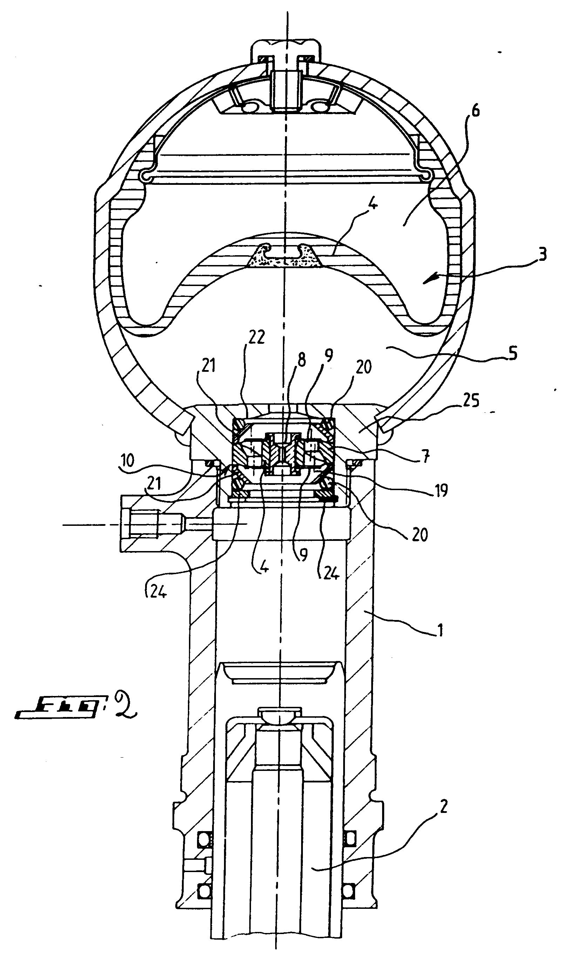

En se reportant à la figure 2, on voit un dispositif de suspension hydropneumatique pour véhicule automobile qui comprend un cylindre 1 articulé de préférence à la partie suspendue (non représentée) d'un véhicule et dans lequel coulisse un piston 2 articulé de préférence à un bras support de roue (non représenté).

Le cylindre 1 est hydrauliquement relié à un accumulateur hydropneumatique 3 comportant une membrane intérieure souple 4 délimitant un espace 5 pour le liquide et un espace 6 contenant un gaz.

Un amortisseur 7 est interposé entre le piston 2 et l'accumulateur ou sphère 3.

L'élément amortisseur 7 comporte un orifice central 8 de passage du liquide entre le cylindre 1 et l'espace 5, et d'autres orifices obturés par des clapets 9.

Mais toutes les dispositions ci-dessus sont en soi bien connues et ne nécessitent pas d'explication complémentaire.

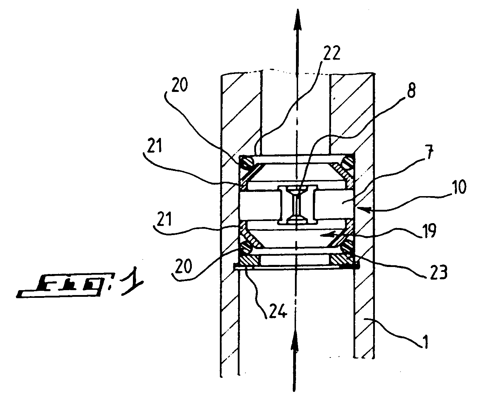

Conformément à l'invention et suivant la réalisation visible sur la figure 1, une pièce mobile 10 constitue l'amortisseur 7 qui joue le rôle de cloison mobile et qui pourra se déplacer suivant une course limitée dans un chambrage 19 ménagé dans le cylindre 1.

Le déplacement de l'amortisseur 7 est limité dans les deux sens par l'écrasement de deux anneaux élastiques 20 logés dans le chambrage 19.

Comme on le voit bien sur la figure 1, deux bagues 21 son interposées entre l'amortisseur 7 et les anneaux élastiques 20. Ces deux bagues, disposées de part et d'autre de l'amortisseur 7, comportent chacune une extrémité rabattue vers l'intérieur et permettant l'écrasement desdits anneaux tout en les maintenant contre des épaulements 22 du chambrage 19 dans le cylindre 1.

On a montré en 23 une cale qui permet d'obtenir la cote d'empilage, tandis qu'un circlips 24 maintient l'ensemble des pièces qui viennent d'être décrites.

On comprend donc qu'une partie du liquide passant dans le cylindre 1 ne traversera pas l'amortisseur 7, par le fait qu'elle sera "absorbée" par son déplacement à l'encontre de la force de rappel des anneaux élastiques 20.

On voit sur la figure 2 une deuxième variante de dispositif selon cette invention, cette variante étant en tous points identique à celle de la figure 1, sauf qu'ici l'amortisseur 7, les bagues 21, et les anneaux élastiques 20, sont logés dans un chambrage 19, qui n'est plus ménagé dans le corps du cylindre 1, mais dans une pièce 25 montée sur l'extrémité dudit cylindre et sur laquelle vient s'accrocher la sphère 3.

Le fonctionnement de cette variante est évidemment exactement le même que celui du dispositif de la figure 1.

On a donc réalisé suivant l'invention plusieurs modes de réalisation d'un dispositif de suspension qui a le mérite de ne transmettre pratiquement aucun effort à la caisse d'un véhicule dont les roues sont soumises à des mouvements faibles en amplitude.

## Revendications

1. Dispositif de suspension hydropneumatique pour véhicule automobile, comprenant un cylindre (1) articulé de préférence à la partie suspendue du véhicule et dans lequel coulisse un piston (2) articulé de préférence à un bras support de roue, ledit cylindre étant hydrauliquement relié à un accumulateur hydropneumatique par l'intermédiaire d'une pièce mobile (10) formant amortisseur (7) interposé entre le piston (2) et l'accumulateur (3), caractérisé en ce que le déplacement de l'amortisseur (7) est limité dans les deux sens par l'écrasement de l'un ou l'autre de deux anneaux élastiques (20) logés dans un chambrage (19) comportant des épaulements (22) et ménagé dans le cylindre (1) ou dans une pièce (25) rapportée sur ce cylindre (1), et en ce que deux bagues (21) sont disposées chacune de part et d'autre de l'amortisseur (7) et comportent chacune du côté de l'anneau élastique (20) une extrémité rabattue vers l'intérieur du chambrage (19) et permettant sous l'effet du déplacement de l'amortisseur, l'écrasement des anneaux (20) tout en les maintenant contre les épaulements (22, 23) du chambrage (19).

2. Véhicule équipé d'un dispositif de suspension selon la revendication 1.

## Patentansprüche

1. Hydropneumatische Aufhängungsvorrichtung für ein Kraftfahrzeug, mit einem vorzugsweise an dem aufgehängten Teil des Fahrzeugs angelenkten Zylinder (1) in welchem ein vorzugsweise an einem Radhalterungsarm angelenkter Kolben (2) gleitet, wobei der besagte Zylinder mit einem hydropneumatischen Akkumulator über ein zwischen dem Kolben (2) und dem Akkumulator (3) eingefügtes einen Dämpfer (7) bildendes bewegbares Stück (10) hydraulisch verbunden ist, dadurch gekennzeichnet, dass die Verschiebung des Dämpfers (7) in beiden Richtungen durch das Zusammendrücken einer von zwei elastischen Ringen (20) beschränkt wird, welche in einer in dem Zylinder (1) oder in dem an diesem Zylinder (1) angebrachten Stück (25) gebildeten Einsenkung aufgenommen sind und dass zwei Ringe (21) beiderseits des Dämpfers (7) angeordnet sind und jeweils an der dem elastischen Ring (20) zugewandten Seite ein nach Innen der Einsenkung (19) umgeschlagenes Ende aufweisen, welches unter der Wirkung der Verschiebung des Dämpfers, das Zusammendrücken der Ringe (20) ermöglicht während es diese gegen die Schultern (22, 23) der Einsenkung (19) hält.

2. Mit einer Aufhängungsvorrichtung nach Anspruch 1 ausgerüstetes Fahrzeug.

## Claims

1. Hydropneumatic suspension device for an automotive vehicle, comprising a cylinder (1) pivotally connected preferably to the suspended portion of the vehicle and in which is sliding a piston (2) pivotally connected preferably to a wheel support arm, the said cylinder being hydraulically connected to a hydropneumatic accumulator through the medium of a movable part (10) forming a damper (7) interposed between the piston (2) and the accumulator (3), characterized in that the displacement of the damper (7) is limited in both directions by the squeezing of either one of two elastic rings (20) accommodated in a recess (19) comprising shoulders (22) and formed in the cylinder (1) or in the part (25) fitted to this cylinder (1) and in that both rings (21) are disposed each one on either side of the damper (7) and comprise each one towards the elastic ring (20) an end folded down inwards of the recess (19) and allowing under the effect of the displacement of the damper the squeezing of the rings (20) while maintaining them against the shoulders (22, 23) of the recess (19).

2. Vehicle fitted with a suspension device according to claim 1.

FIG. 1

FIG. 2